# EUROPEAN PATENT SPECIFICATION

(11) **EP 0 397 280 B1**
(45) Date of publication and mention of the grant of the patent: **02.08.1995**
(21) Application number: 90201191.5
(22) Date of filing: 11.05.1990
(51) Int. Cl.: B29B 17/00

(54) **A process and device for processing plastic waste into blocks**
Verfahren und Vorrichtung zur Verarbeitung von Kunststoffabfall zu Blöcken
Procédé et dispositif de traitement de déchets plastiques en blocs

(30) Priority: 12.05.1989 NL 8901198
(43) Date of publication of application: 14.11.1990
(73) Proprietor: Thermopers B.V., NL-3225 LV Hellevoetsluis (NL)
(72) Inventor: De Soet, Antonius Hendrikus, NL-1722 HE Zuid-Scharwoude (NL)
(74) Representative: Kupecz, Arpad

(56) References cited:
- FR-A- 1 506 209
- FR-A- 2 166 003
- FR-A- 2 186 335
- FR-A- 2 294 037

## Description

The present invention relates to a process for processing plastic waste, in the form of thermoplastic packaging foil, into blocks wherein: the plastic waste is introduced into a container having side walls, a bottom wall and a punch;
the plastic waste is compressed;
heat is added to the plastic waste through the side walls of the container in order to soften the surface of the plastic waste; the plastic waste is cooled, wherein the softened outer layer hardens; and
the resulting compressed blocklike plastic waste is removed from the container, as well as to a device for the application of said process.

A similar process and device are essentially known from the French patent application 2, 294,037.

The known process and device do have the disadvantage, that the processing of the plastic waste into blocks is extremely complicated and therefore expensive. The known process has to be carried out in a device, wherein the container for receiving the plastic waste to be processed into blocks comprises a horizontally arranged tube type room, which on both sides is provided with a piston, of which one piston is connected with a guide system and a spring mechanism, whereas the other piston is connected with a hydraulic jack. The walls of said tubelike room, as well as the inner surfaces of said pistons are not provided with a coating resulting in the adhering of the obtained plastic waste blocks to the walls, with the consequence that on the one hand the removal of the blocks is difficult and on the other hand said walls have to be cleaned repeatedly. The cooling of the plastic waste to be compressed into a block occurs by means of a cold liquid, which is run through canals, which are arranged in the walls of the room and/or of the pistons. Furthermore the load opening and discharge opening are the same. The known device has furthermore the disadvantage that said material may get stuck easily during compressing.

The invention aims now to provide a process and device, wherein the above mentioned disadvantages are removed with success.

In this connection the invention provides a process for processing plastic waste, in the form of thermoplastic packaging foil, into blocks wherein: the plastic waste is introduced into a container having side walls, a bottom wall and a punch;
the plastic waste is compressed;
heat is added to the plastic waste through the side walls of the container in order to soften the surface of the plastic waste; the plastic waste is cooled, wherein the softened outer layer hardens; and
the resulting compressed blocklike plastic waste is removed from the container, characterized in that
the compression of the plastic waste is carried out at a pressure of 250 to 400 g/cm²;
heat is further added to the plastic waste through the fixed bottom wall of the container and through the single punch in order to soften and further melt the surface of the plastic waste at a temperature of 120 to 180°C;
the cooling of the plastic waste is carried out by introduction of air into the container by means of a fan for 5 to 15 minutes, whereby the softened and molten outer layer hardens.

Preferably the compressing takes place at a temperature of 140 - 160°C and a pressure of 260 - 290 g/cm².

During heating of the block its outer layer is softened, wherein the plastic particles do melt with each other, followed by cooling of the outer layer in order to solidify the molten plastic particles. The obtained blocks do possess around all a hard outer layer, resulting in a convenient transportation and storage.

Suitably the cooling takes place by the introduction of air into the container by means of a fan. Usually the cooling takes place in 5 - 15 minutes and preferably 8 - 10 minutes.

According to another embodiment of the process according to the invention the container, more specifically a series of containers behind each other is forwarded by means of a conveyor belt from a loading zone, where the container is loaded with plastic waste and said plastic waste is compressed with a punch at a pressure of 250 - 400 g/cm², conveyed through a heating zone, where the container is heated to a temperature of 120 - 180°C in order to soften the outer layer of the load, followed by transporting of the container with its contents to and through a cooling zone and then to a discharge zone, where the compressed and shaped load is removed from the container.

Furthermore the invention relates to a device for the application of the process, which comprises a container having a side wall, a bottom wall and a punch, wherein the side wall of the container is provided with one or more heating elements; and the container is provided with cooling means, characterized in that the container is in the form of a rectangular parallelepipedon with a rear wall, a front wall, a pair of opposed side walls, a fixed bottom wall and a single punch movable in the container; the rear wall, front wall, opposed side walls, fixed bottom wall and punch are provided with one or more electrical heating elements; the cooling means comprise air inlet means into the container and a fan for driving the air; the inner surfaces of the container ace provided with a coating in order to prevent the softened and molten compressed plastic waste from adhering to the walls.

The device according to the invention is relatively uncomplicated.

Instead of two pistons the device according to the invention is provided with only one single punch for compressing the plastic waste to a block. Furthermore there is no spring mechanism, whereas furthermore the cooling occurs simply by means of air instead of a cooling liquid, which is run through canals in the walls and the inner surface of the pistons.

Another important advantage of the present device is that the inner walls of the container and punch are provided with a coating, resulting in preventing the plastic waste during and after compressing to a block from adhering to the innerside of the device with the mentioned undesired effects.

The coating is preferably teflon (PTFE), but other similar materials may be used provided that they are resistant against the prevailing temperature and pressure.

Finally the room wherein the compression of the plastic waste occurs is vertical.

It is noted that the French patent application 2,166,003 also relates to a device for compacting plastic material. Said device is provided with a piston, which in its turn is provided with an elongated middle piece. The material to be compacted is transported by means of a piston to a funnellike device, which is open at its tapered end, so that subsequent to heating and compacting the material leaves the device in the form of a continuous sausage. Herein no blocks are obtained. The inner walls are uncoated resulting in the above mentioned disadvantages.

The invention will be now further illustrated by means of the drawing of two embodiments.

Fig. 1 is a vertical section of a device according to the invention.

Fig. 2 is a further embodiment of the device for an enlarged capacity.

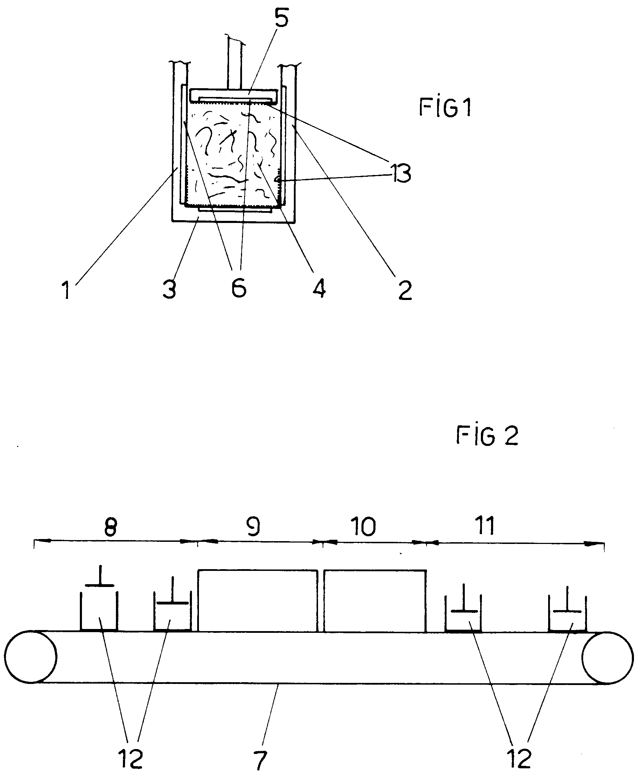

As is indicated in fig. 1 the container has the form of a rectangular parallelepipedon with a rear wall, a front wall, two side walls 1 and 2 and a bottom 3.

In the room which is formed by the walls and bottom a plastic waste load 4 may be introduced, which may be compressed into a block by means of the punch 5, and wherein the outer surface of the load may be heated to the softening point of the plastic, to wit to 120 - 180°C, by means of the electric heating elements 6, which are arranged in the walls and in the bottom of the container as well as in the punch. The inner heated parts of the walls are provided with a teflon coating 13. The teflon coating may be replaced by for instance another suitable material.

By compressing, heating and cooling of the load again in the container a form stable block of plastic is obtained.

In the preferred embodiment according to fig. 1 said front wall comprises a double door. Via the upper door the device is loaded with the plastic waste, whereas the punch 5 is in the upper position and the lower door is in the closed position. Subsequent to the loading of the device the upper door is closed and the punch is moved downwards in order to compress the plastic waste. After completion of the compression/heating step and cooling the obtained plastic waste block is removed from the device by opening the lower door and by taking away the obtained plastic waste block.

As schematically indicated by fig. 2 the device comprises a conveyor belt 7, a loading zone 8, a heating zone 9, a cooling zone 10 and finally a discharge zone 11.

In the loading zone the containers 12, the inner side of which is provided with the coating, may be loaded with plastic waste, which is compressed into blocks in the container followed by transporting it through the heating zone 9, where the blocks do soften and melt at their outer surfaces.

Then the containers are transported through the cooling zone 10 where the processed material solidifies at the outer surfaces of the blocks and wherein the from stable blocks of plastic waste are obtained, which finally may be removed in the discharge zone 11 from the containers.

The heating of the containers in the heating zone 9 may occur by means of burners, which are directed to the preferably steel containers and punches.

Then the heated containers may be cooled off again in the cooling zone by means of a number of sprinkle nozzles through which cooling water is sprayed against the containers, so that a heating to the softening point and later cooling in a very fast and effective way may occur.

It will be clear that the present invention by no means is restricted to the embodiment as illustrated in the figures.

## Claims

1. A process for processing plastic waste, in the form of thermoplastic packaging foil, into blocks wherein:
the plastic waste (4) is introduced into a container (12) having side walls (1, 2), a bottom wall (3) and a punch (5); the plastic waste (4) is compressed;
heat is added to the plastic waste (4) through the side walls (1, 2) of the container (12) in order to soften the surface of the plastic waste (4);
the plastic waste (4) is cooled, wherein the softened outer layer hardens; and
the resulting compressed blocklike plastic waste (4) is removed from the container (12),
**characterized in that**
the compression of the plastic waste (4) is carried out at a pressure of 250 to 400 g/cm²;
heat is further added to the plastic waste (4) through the fixed bottom wall (3) of the container (12) and through the single punch (5) in order to soften and further melt the surface of the plastic waste (4) at a temperature of 120 to 180°C;
the cooling of the plastic waste (4) is carried out by introduction of air into the container (12) by means of a fan for 5 to 15 minutes, whereby the softened and molten outer layer hardens.

2. The process according to claim 1, **characterized in that** the compressing is carried out at a temperature of 140 - 160°C and a pressure of 260 - 290 g/cm².

3. The process according to claim 1 or 2, **characterized in that** the cooling takes place in 8 - 10 minutes.

4. Device for the application of the process according to claim 1, which comprises a container (12) having a side wall (1, 2), a bottom wall (3) and a punch (5), wherein the side wall (1, 2) of the container (12) is provided with one or more heating elements (6); and
the container (12) is provided with cooling means
**characterized in that**
the container (12) is in the form of a rectangular parallelepipedon with a rear wall, a front wall, a pair of opposed side walls (1, 2), a fixed bottom wall (3) and a single punch (5) movable in the container (12);
the rear wall, front wall, opposed side walls (1, 2), fixed bottom wall (3) and punch (5) are provided with one or more electrical heating elements (6);
the cooling means comprise air inlet means into the container (12) and a fan for driving the air;
the inner surfaces of the container (12) are provided with a coating (13) in order to prevent the softened and molten compressed plastic waste (4) from adhering to the walls.

5. Device according to claim 4, **characterized in that** the coating (13) is teflon.

## Patentansprüche

1. Verfahren zur Verarbeitung von Kunststoffabfall, in Form von thermoplastischer Verpackungsfolie, in Blocks, wobei
der Kunststoffabfall (4) in einen Seitenwandungen (1, 2), eine Bodenwandung (3) und einen Stempel (5) aufweisenden Behälter (12) eingebracht wird;
der Kunststoffabfall (4) komprimiert wird;
dem Kunststoffabfall (4) über die Seitenwandungen (1, 2) des Behälters (12) Wärme zugeführt wird, um die Oberfläche des Kunststoffabfalls (4) zu erweichen;
der Kunststoffabfall (4) gekühlt wird, wobei sich die erweichte äußere Oberfläche erhärtet; und
der daraus erhaltene komprimierte blockähnliche Kunststoffabfall (4) aus dem Behälter (12) entnommen wird,
**dadurch gekennzeichnet, daß**
die Komprimierung des Kunststoffabfalls (4) bei einem Druck von 250 bis 400 g/cm² durchgeführt wird;
dem Kunststoffabfall (4) außerdem über die feste Bodenwandung (3) des Behälters (12) und über den einen Stempel (5) Wärme zugeführt wird, um die Oberfläche des Kunststoffabfalls (4) bei einer Temperatur von 120 bis 180°C zu erweichen und weiter zu schmelzen;
die Kühlung des Kunststoffabfalls (4) durch Zufuhr von Luft für 5 bis 15 Minuten über ein Gebläse durchgeführt wird, wobei sich die erweichte und geschmolzene äußere Schicht erhärtet.

2. Verfahren nach Anspruch 1, **dadurch gekennzeichnet**, daß das Komprimieren bei einer Temperatur von 140 bis 160°C und einem Druck von 260 bis 290 g/cm² durchgeführt wird.

3. Verfahren nach Anspruch 1 oder 2, **dadurch gekennzeichnet**, daß das Kühlen 8 bis 10 Minuten lang durchgeführt wird.

4. Vorrichtung zur Durchführung des Verfahrens nach Anspruch 1, mit einem eine Seitenwandung (1, 2), eine Bodenwandung (3) und einen Stempel (5) aufweisenden Behälter (12), wobei die Seitenwandung (1, 2) des Behälters (12) mit einem oder mehreren Heizelementen (6) versehen ist; und der Behälter (12) mit einer Kühleinrichtung versehen ist,
**dadurch gekennzeichnet, daß**
der Behälter (12) die Form eines rechtwinkligen Parallelepipeds hat mit einer hinteren Wandung, einer vorderen Wandung, einem Paar gegenüberliegender Seitenwandungen (1, 2), einer festen Bodenwandung (3) und einem einzelnen, in dem Behälter (12) bewegbaren Stempel (5);
die hintere Wandung, die vordere Wandung, die gegenüberliegenden Seitenwandungen (1, 2), die feste Bodenwandung (3) und der Stempel (5) mit einem oder mehreren elektrischen Heizelementen (6) versehen sind;
die Kühleinrichtung eine Lufteinlaßeinrichtung in den Behälter (12) hinein und ein Gebläse zum Einbringen der Luft aufweist;
die inneren Oberflächen des Behälters (12) mit einer Beschichtung (13) versehen sind, um ein Anhaften des erweichten und geschmolzenen komprimierten Kunststoffabfalls (4) an den Wandungen zu verhindern.

5. Vorrichtung nach Anspruch 4, **dadurch gekennzeichnet**, daß die Beschichtung (13) aus Teflon besteht.

## Revendications

1. Processus pour transformer des déchets en plastique, sous la forme de feuille d'emballage thermoplastique, en blocs, dans lequel :
les déchets en plastique (4) sont introduits dans un conteneur (12) ayant des parois latérales (1, 2), une paroi inférieure (3) et un poinçon (5) ;
les déchets en plastique (4) sont compressés ;
de la chaleur est apportée aux déchets en plastique (4) à travers les parois latérales (1, 2) du conteneur (12) afin de ramollir la surface des déchets en plastique (4) ;
les déchets en plastique (4) sont refroidis, dans lesquels la couche extérieure ramollie durcit ; et
les déchets en plastique (4) sous forme de bloc compressé résultant sont retirés du conteneur (12),
**caractérisé en ce que**
la compression des déchets en plastique (4) est exécutée à une pression de 250 à 400 g/cm² ;
de la chaleur est encore apportée aux déchets en plastique (4) à travers la paroi inférieure fixe (3) du conteneur (12) et par l'intermédiaire du poinçon simple (5) afin de ramollir et de fondre davantage la surface des déchets en plastique (4) à une température de 120 à 180 °C ;
le refroidissement des déchets en plastique (4) est effectué par l'introduction d'air dans le conteneur (12) au moyen d'un ventilateur pendant 5 à 15 minutes, de sorte que la couche extérieure fondue et ramollie durcisse.

2. Processus selon la revendication 1, **caractérisé en ce que** la compression est effectuée à une température de 140 à 160 °C et à une pression de 260 à 290 g/cm².

3. Processus selon la revendication 1 ou 2, **caractérisé en ce que** le refroidissement a lieu en 8 à 10 minutes.

4. Dispositif pour l'application du processus selon la revendication 1, qui comprend un conteneur (12) ayant une paroi latérale (1, 2), une paroi inférieure (3) et un poinçon (5), dans lequel
les parois latérales (1, 2) du conteneur (12) sont munies d'un ou plusieurs éléments de chauffage (6) ; et
dans lequel le conteneur (12) est muni d'un moyen de refroidissement
**caractérisé en ce que**
le conteneur (12) est sous la forme d'un parallélépipède rectangulaire avec une paroi arrière, une paroi avant, une paire de parois latérales opposées (1, 2), une paroi inférieure fixe (3) et un simple poinçon (5) mobile dans le conteneur (12) ;
la paroi arrière, la paroi avant, les parois latérales opposées (1, 2), la paroi inférieure fixe (3) et le poinçon (5) sont munis d'un ou plusieurs éléments chauffants électriques (6) ;
le moyen de refroidissement comprend un moyen d'admission d'air dans le conteneur (12) et un ventilateur pour entraîner l'air ;
les surfaces intérieures du conteneur (12) sont munies d'un revêtement (13) afin d'empêcher les déchets de plastique compressés fondus et ramollis (4) de coller aux parois.

5. Dispositif selon la revendication 4, **caractérisé en ce que** le revêtement (13) est en Téflon.
